# EUROPEAN PATENT SPECIFICATION

(11) **EP 3 831 704 B1**
(45) Date of publication and mention of the grant of the patent: **28.02.2024**
(21) Application number: 20211165.4
(22) Date of filing: 02.12.2020
(51) Int. Cl.: B62M 11/16, B62M 9/121

(54) **A STAGE-VARIATION VARIABLE SPEEDS TRANSMISSION BICYCLE**
FAHRRAD MIT STUFE UND GESCHWINDIGKEIT VERÄNDERLICHEM GETRIEBE
BICYCLETTE À TRANSMISSION À VITESSE VARIABLE ET À VARIATION D'ÉTAGE

(30) Priority: 02.12.2019 CN 201922122995 U
(43) Date of publication of application: 09.06.2021
(73) Proprietor: Li, Shoujin, Chengdu, Sichuan (CN)
(72) Inventor: Li, Shoujin, Chengdu, Sichuan (CN)
(74) Representative: Cabinet Chaillot

(56) References cited:
- EP-A2- 2 319 753
- WO-A2-2011/102606
- DE-A1- 2 536 813
- US-A- 4 400 999
- US-A- 5 154 676
- US-A1- 2012 225 749
- US-A1- 2016 362 160
- US-A1- 2018 045 279
- US-A1- 2018 244 348
- US-B2- 9 180 930

## Description

### Background of the Invention

### 1. Field of the Invention

The invention relates to the technical field of bicycle, in particular to a stage-variation variable speeds transmission bicycle.

### 2. Description of the Related Art

WO 2011/102606 discloses the preamble of claim 1.

The transmission system of bicycle is a critical part thereof and its role is transmission. The main purpose is to transfer the power of the human body to the wheel system of the bicycle, therefore the bicycle can generate power to operation.

At present, the transmission system of bicycle can be divided into two major types, one is speed-variable transmission system, the other is the single-speed transmission system. The type of transmission system selected for different road conditions and different riding styles is also inconsistent. In addition, there are two-stage transmission and multi-stage transmission for higher speed. The disadvantages of one-stage single-speed bicycle in the prior art is low speed; the speed-variable bicycle also has a low speed because the nature thereof is one-stage transmission; the bicycle of two-stage or above has high speed, but it is hard to start. There are also a type of internal speed-conversion, which is complicated and expensive like motor transmission, and the maintenance price is high, thereby this type of transmission is rarely used now. The conventional bicycle of the prior art, whether the type of the single-speed or speed-variable, is one-stage speed ratio, thereby the speed is not fast, and it is impossible for a bicycle enthusiast with extreme physical fitness unable to fully utilize the speed and enjoy the happiness brought by speed. For the current two-stage or multi-stage transmission bicycles, it is hard to start and climb slope if the speed ratio is too large, and it is also difficult to achieve the purpose of making the bicycle run faster if the speed ratio is too small.

### Summary of the Invention

The technical problem to be solved by the invention is that, providing a bicycle easy to start and can be operated at a high speed, and in order to solve above problems, the invention provides a stage-variation variable speeds transmission bicycle, with simple technology; reliable operation; convenient maintenance; low cost; and with an energy-saving and environment-friendly technical solution.

In order to solve above technical problems, the invention adapts following technical schemes:

A stage-variation variable speeds transmission bicycle, comprising a bicycle bracket, wherein the bicycle bracket is provided with a medial axis, a medial axis chain wheel group is arranged on the medial axis, comprising a freehub arranged on bicycle rear shaft, the freehub is fixed with a sun gear (also known as sun wheel), one side of the sun gear is provided with a planetary carrier, planetary gears are provided in the planetary carrier, a gear ring is provided radially outward of the planetary gears, a ratchet is provided radially outward of the gear ring, the ratchet is provided with a pawl, and the pawl is fixed on the bicycle bracket, the pawl is controlled and adjusted by connecting with a derailleur beside bicycle handle by a steel wire rope, the pawl and the ratchet are detached or engaged to realize switch between the one-stage transmission status and two-stage transmission status by the extension or retraction of the steel wire rope, pin half-coupling A is provided axially outward of the planetary carrier, a main chain wheel is side-by-side arranged beside the planetary carrier, the main chain wheel is provided with pin half-coupling B, the pin half-coupling A on the planetary carrier and the pin half-coupling B on the main chain wheel are engaged, thereby the main chain wheel can effectively power planetary transmission, characterized in that the medial axis chain wheel group comprises three chain wheels with different size, and a one-way bearing is provided inside the main chain wheel.

Preferably, the planetary carrier is provided with three planetary gears, the planetary gears are engaged inside the planetary carrier.

Preferably, the medial axis chain wheel group is linked to the main chain wheel by a chain to form a power input system, when the pawl and the ratchet are detached, the planetary transmission rotates following the main chain wheel, the gear ring is unrestrained and the planetary transmission is idled, thereby the power directly drives the freehub to drive the bicycle by the main chain wheel through one-way bearing, and the one-stage transmission system of the bicycle is formed.

Preferably, the medial axis chain wheel group is linked to the main chain wheel by a chain to form a power input system. When the pawl and the ratchet are engaged, the gear ring does not rotate following the main chain wheel, simultaneously, the main chain wheel drives the planetary carrier of the planetary transmission to rotate by pin coupling, as the gear ring is fixed, the planetary carrier can only drive the sun gear to rotate synclastically, and the planetary transmission is involved in the operation of the transmission system, thereby the two-stage transmission system of the bicycle is formed. Simultaneously, the rotate speed of the freehub is higher than that of the main chain wheel, and due to the use of one-way bearing, the contradiction between the two coaxial parts with different rotate speeds can be resolved.

Preferably, the pawl is controlled and adjusted by connecting with a derailleur beside bicycle handle by a steel wire rope, and the pawl and the ratchet are detached or engaged by the extension or retraction of the steel wire rope.

Compared with the prior at, the invention has advantageous effects:

the invention is easy to start and can be operated at a high speed, the function is powerful while the technology is simple; the operation is reliable; the maintenance is convenient; the cost is low; the bicycle has great market prospects with the advantage of energy-saving and environment-friendly, which may bring great convenience to cyclists. The invention combines the characteristics of the one-stage transmission and two-stage transmission, and solves the problem that the bicycle can easily start and go uphill, and can ride at high speed, the invention also can realize switch between the one-stage and two-stage transmission status arbitrarily during riding and parking to ensure a better cycling experience.

### Brief Description of the Drawings

FIG. 1 shows the structure of the medial axis of the invention.
FIG. 2 shows the structure of the planetary transmission of a the invention.

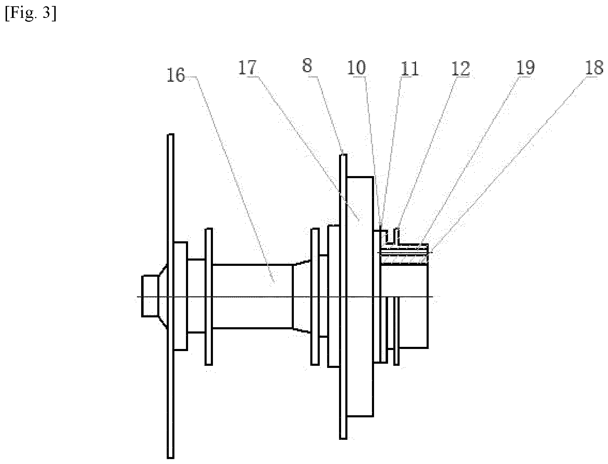

FIG. 3 shows the structure of the rear shaft of the invention.

As shown in accompanying drawings: 1 refers to bicycle bracket, 2 refers to medial axis, 3 refers to medial axis chain wheel group, 4 refers to sun gear, 5 refers to planetary carrier, 6 refers to planetary gear, 7 refers to gear ring, 8 refers to ratchet, 9 refers to pawl, 10 refers to pin coupling A, 11 refers to pin coupling B, 12 refers to main chain wheel, 13 refers to steel wire rope, 14 refers to derailleur, 15 refers to chain, 16 refers to rear shaft, 17 refers to planetary transmission, 18 refers to freehub, 19 refers to one-way bearing.

### Detailed Description of the Preferred Embodiments

The invention will be further described below with reference to accompanying drawings.

A stage-variation variable speeds transmission bicycle, comprising a bicycle bracket 1, wherein the bicycle bracket 1 is provided with a medial axis 2, a medial axis chain wheel group 3 is arranged on the medial axis 2, medial axis chain wheel group 3 comprises three chain wheels with different size; also comprising a freehub 18 arranged on bicycle rear shaft 16, the freehub 18 is fixed with a sun gear 4 (also know as sun wheel), one side of the sun gear 4 is provided with a planetary carrier 5, planetary gears 6 are provided in the planetary carrier 6, a gear ring 7 is provided radially outward of the planetary gears 6, a ratchet 8 is provided radially outward of the gear ring 7, the ratchet 8 is provided with a pawl 9, and the pawl 9 is fixed on the bicycle bracket 1, the pawl 9 is controlled and adjusted by connecting with a derailleur 14 beside bicycle handle by a steel wire rope 13, the pawl 9 and the ratchet 8 are detached or engaged by the extension or retraction of the steel wire rope 13, thereby realizing the switch between one-stage transmission status and two-stage transmission status, pin half-coupling A 10 is provided axially outward of the planetary carrier 5, a main chain wheel 12 is side-by-side arranged beside the planetary carrier 5, one-way bearing 19 is provided inside the main chain wheel 12, the main chain wheel 12 is also provided with pin half-coupling B 11, the pin half-coupling A 10 on the planetary carrier 5 and the pin half-coupling B 11 on the main chain wheel are engaged, thereby the main chain wheel 12 can effectively power planetary transmission 17.

Furthermore, the planetary carrier 5 is provided with three planetary gears 6, the planetary gears 6 are engaged inside the planetary carrier 5.

The sun gear 4 is fixed on the freehub 18 of bicycle rear shaft 16, the gear ring 7 and the planetary carrier 5 are respectively arranged on two sides of the sun gear 4.

The medial axis chain wheel group 3 is linked to the main chain wheel 12 by a chain 15 to form a power input system, when the pawl 9 and the ratchet 8 are detached, the planetary transmission 17 rotates following the main chain wheel 12, the gear ring 7 is unrestrained and the planetary transmission 17 is idled, thereby the power directly drives the freehub 18 to drive the bicycle by the main chain wheel 12 through one-way bearing 19, and the one-stage transmission system of the bicycle is formed, the one-stage transmission system has three different speed ratios because the medial axis chain wheel group 3 has three chain wheels with different size.

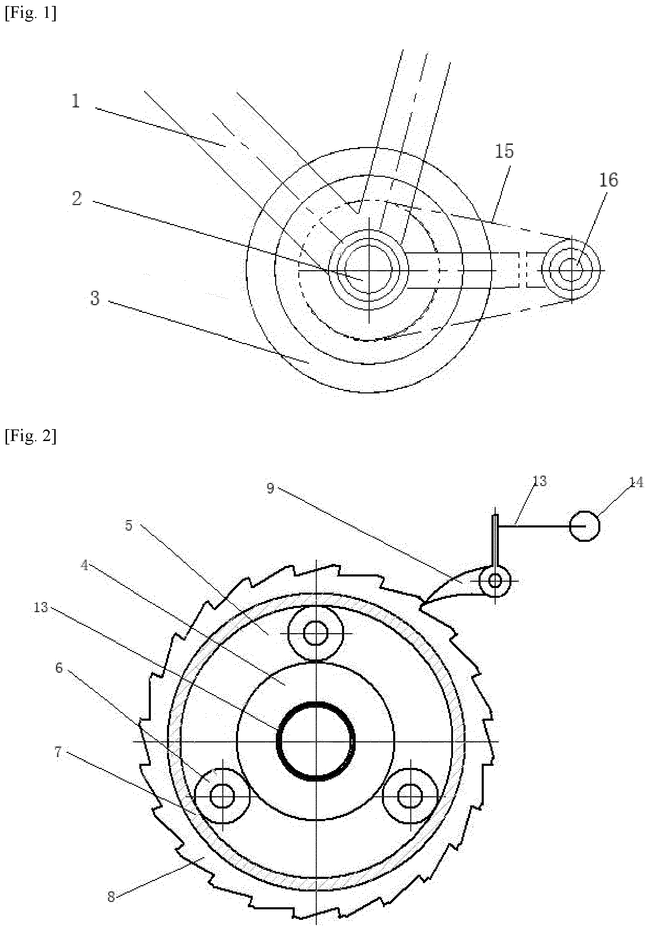

The structure of the planetary transmission in the invention comprises the ratchet 8, the pin coupling A 10, pin coupling B 11, the main chain wheel 12, the rear shaft 16, the planetary transmission and other components shown in FIG. 2.

The medial axis chain wheel group 3 is linked to the main chain wheel 12 by a chain 15 to form a power input system. When the pawl 9 and the ratchet 8 are engaged, the gear ring 7 does not rotate following the main chain wheel 12, simultaneously, the main chain wheel 12 drives the planetary carrier 5 of the planetary transmission 17 to rotate by pin coupling, as the gear ring 7 is fixed, the planetary carrier 5 can only drive the sun gear 4 to rotate synclastically, and the planetary transmission 17 is involved in the operation of the transmission system, thereby the two-stage transmission system of the bicycle is formed. Simultaneously, the rotate speed of the freehub 18 is higher than that of the main chain wheel 12, and due to the use of one-way bearing 19, the contradiction between the two coaxial parts with different rotate speeds can be resolved. The ratchet 8 can only fix the gear ring 7 in one direction, thereby the bicycle can return chain in the status of two-stage transmission.

The two-stage transmission system has three different speed ratios because the medial axis chain wheel group 3 has three chain wheels with different size, and the bicycle in the invention has six different speed ratios to choose during cycling.

The pawl 9 is controlled and adjusted by connecting with a derailleur 14 beside bicycle handle by a steel wire rope 13.

The invention combines the characteristics of the one-stage transmission and two-stage transmission, and solves the problem that the bicycle can easily start and go uphill, and can ride at high speed, the invention also can realize switch between the one-stage and two-stage transmission status arbitrarily during riding and parking to ensure a better cycling experience.

The invention retains the one-stage transmission, thereby the transmission efficiency of the bicycle is improved as much as possible , and the minimum speed ratio can be about 1:1.5 or lower, which not only improves the efficiency of starting and climbing slope, also ensures the high transmission efficiency of the bicycle; due to the two-stage transmission is adopted, the maximum speed ratio can be 1:7 or higher, and the speed of the bicycle can reach 50 km/h or even higher.

A sun gear 4 is fixed on the freehub 18 of the bicycle rear shaft 16, one side of the sun gear 4 is provided with a planetary carrier 5, planetary gears 6 are provided in the planetary carrier 5, a gear ring 7 is provided radially outward of the planetary gears 6, a ratchet 8 is provided radially outward of the gear ring 7, the ratchet 8 is provided with a pawl 9, and the pawl 9 is fixed on the bicycle bracket 1, the pawl 9 is controlled and adjusted by connecting with a derailleur 14 beside bicycle handle by a steel wire rope 13, and the pawl 9 and the ratchet 8 are detached or engaged to realize switch between the one-stage transmission status and two-stage transmission status by the extension or retraction of the steel wire rope 13, pin half-coupling A 10 is provided axially outward of the planetary carrier 5; a main chain wheel 12 is arranged on the freehub 18 of the bicycle rear shaft 16, one-way bearing 19 is provided inside the main chain wheel 12, which is used for realizing one-stage transmission and solving the problem that the rotate speed of the main chain wheel 12 and the freehub 18 are not synchronal in two-stage transmission status, the main chain wheel 12 is also provided with pin half-coupling B 11, the main chain wheel 12 and the planetary carrier 5 are connected through the pin coupling to transmit the power of the main chain wheel 12.

Moreover, the terms "the first" and "the second" are merely used for descriptive purposes and are not to be understood to indicate or imply the relative importance or implicitly indicate the number of technical features indicated. Thereby, the features defined by "the first", "the second" may comprise one or more of the features, either explicitly or implicitly, and in the description of the invention, "multiple" means two or more unless there are clear and specific restrictions.

In the invention, the terms of "arrange", "link", "connect", "fix" and etc., should be generally understood unless there are specific restrictions or stipulations. For example, the "connect" may refer to fixed connection, detachable connection or integral connection; the "connect" may also refer to mechanical connection or electrical connection; the means of "connect"may be directly connected or indirectly connected through an intermediate medium, and may be internal communication between the two elements. For those skilled in the art, the specific meaning of the above terms in the invention can be understood according to the specific situation.

In the invention, unless there are specific restrictions or stipulations, the first feature is "above" or "below" the second feature may comprise that the first feature is in direct contact with the second feature, and may further comprise that the first feature may not be in direct contact with the second feature instead contacting through another feature formed between them. Moreover, the first feature is "upward", "above" and "over" the second feature may comprise that the first feature is directly above and obliquely above the second feature, or simply means that the horizontal height of first feature is higher than that of the second feature. The first feature is "downward", "below" and "under" the second feature may comprise that the first feature is directly below and obliquely below the second feature, or simply means that the horizontal height is less than that of the second feature.

In the description of the disclosure, the reference terms "one embodiment", "some embodiments", "example", "specific example", "some examples" and etc., may refer to that the specific features, structures, materials or characteristics described by combining the embodiment or example are included in at least one embodiment or example. In the specification, schematic statement of above terms does not necessarily refer to the same embodiment or example. In addition, the described specific features, structures, materials, or characteristics may be combined in any one or more embodiments or examples in an appropriate manner.

Although the embodiments of the invention have been shown and described above, it is understood that the embodiments described above are illustrative and are not to limit the scope of the invention.

## Claims

1. A stage-variation variable speeds transmission bicycle, comprising a bicycle bracket (1), wherein the bicycle bracket (1) is provided with a medial axis (2), a medial axis chain wheel group (3) is arranged on the medial axis (2), comprising a freehub (18) arranged on bicycle rear shaft (16), the freehub (18) is fixed with a sun gear (4), one side of the sun gear (4) is provided with a planetary carrier (5), planetary gears (6) are provided in the planetary carrier (5), a gear ring (7) is provided radially outward of the planetary gears (6), a ratchet (8) is provided radially outward of the gear ring (7), a main chain wheel (12) is side-by-side arranged beside the planetary carrier (5), a one-way bearing (19) is provided inside the main chain wheel (12),
**characterized in that**
the medial axis chain wheel group (3) comprises three chain wheels with different size; and a ratchet (8) is provided radially outward of the gear ring (7), the ratchet (8) is provided with a pawl (9), and the pawl (9) is fixed on the bicycle bracket (1), the pawl (9) is controlled and adjusted by connecting with a derailleur beside bicycle handle by a steel wire rope (13), the pawl (9) and the ratchet (8) are detached or engaged by the extension or retraction of the steel wire rope (13), a pin coupling A (10) is provided axially outward of the planetary carrier (5), the main chain wheel (12) is provided with a pin coupling B (11), the pin coupling A (10) on the planetary carrier (5) and the pin coupling B (11) on the main chain wheel (12) are engaged, thereby the main chain wheel (12) can effectively power planetary transmission (17).

2. The stage-variation variable speeds transmission bicycle of claim 1, wherein the planetary carrier (5) is provided with three planetary gears (6), the planetary gears (6) are engaged inside the planetary carrier (5).

3. The stage-variation variable speeds transmission bicycle of claim 1, wherein the medial axis chain wheel group (3) is linked to the main chain wheel (12) by a chain (15) to form a power input system, when the pawl (9) and the ratchet (8) are detached, the gear ring (7) rotates following the main chain wheel (12), and there is no intervention of the planetary transmission, thereby the power is directly transmitted to the freehub (18) by the main chain wheel (12) through one-way bearing (19) to drive the bicycle move forward.

4. The stage-variation variable speeds transmission bicycle of claim 1, wherein the medial axis chain wheel group (3) is linked to the main chain wheel (12) by a chain to form a power input system, when the pawl (9) and the ratchet (8) are engaged, the gear ring (7) does not rotate following the main chain wheel (12), thereby the power is transmitted to the planetary carrier (5) by the main chain wheel (12) through pin coupling, as the gear ring (7) is fixed, the planetary carrier (5) drives the sun gear (4) and thereafter drives the freehub (18), and finally drives the bicycle to move forward, thereby forming two-stage transmission system of the bicycle.

5. The stage-variation variable speeds transmission bicycle of claim 1, wherein the pawl (9) is controlled and adjusted by connecting with a derailleur (14) beside bicycle handle by a steel wire rope (13).

## Patentansprüche

1. - Fahrrad mit stufenvariabler Gangschaltung, umfassend eine Fahrradhalterung (1), wobei die Fahrradhalterung (1) mit einer Mittelachse (2) versehen ist, eine Mittelachsen-Kettenradgruppe (3) auf der Mittelachse (2) angeordnet ist, umfassend einen Freilauf (18), der auf der Fahrrad-Hinterradwelle (16) angeordnet ist, wobei der Freilauf (18) mit einem Sonnenrad (4) befestigt ist, eine Seite des Sonnenrades (4) mit einem Planetenträger (5) versehen ist, in dem Planetenträger (5) Planetenräder (6) bereitgestellt sind, radial außerhalb der Planetenräder (6) ein Zahnkranz (7) bereitgestellt ist, radial außerhalb des Zahnkranzes (7) ein Klinkenrad (8) bereitgestellt ist, ein Hauptkettenrad (12) seitlich neben dem Planetenträger (5) angeordnet ist, ein Einweglager (19) innerhalb des Hauptkettenrads (12) bereitgestellt ist, **dadurch gekennzeichnet, dass**
die Mittelachsen-Kettenradgruppe (3) drei Kettenräder mit unterschiedlicher Größe umfasst; und ein Klinkenrad (8) radial außerhalb des Zahnkranzes (7) bereitgestellt ist, das Klinkenrad (8) mit einer Sperrklinke (9) versehen ist und die Sperrklinke (9) an der Fahrradhalterung (1) befestigt ist, die Sperrklinke (9) durch Verbindung mit einem Umwerfer neben dem Fahrradgriff durch ein Stahldrahtseil (13) gesteuert und eingestellt wird, die Sperrklinke (9) und das Klinkenrad (8) durch Ausfahren oder Einziehen des Stahldrahtseils (13) gelöst oder in Eingriff gebracht werden, eine Bolzenkupplung A (10) axial außerhalb des Planetenträgers (5) bereitgestellt ist, das Hauptkettenrad (12) mit einer Bolzenkupplung B (11) versehen ist, die Bolzenkupplung A (10) auf dem Planetenträger (5) und die Bolzenkupplung B (11) auf dem Hauptkettenrad (12) in Eingriff sind, wodurch das Hauptkettenrad (12) das Planetengetriebe (17) wirksam antreiben kann.

2. - Fahrrad mit stufenvariabler Gangschaltung nach Anspruch 1, wobei der Planetenträger (5) mit drei Planetenrädern (6) versehen ist, die Planetenräder (6) in den Planetenträger (5) eingreifen.

3. - Fahrrad mit stufenvariabler Gangschaltung nach Anspruch 1, wobei die Mittelachsen-Kettenradgruppe (3) durch eine Kette (15) mit dem Hauptkettenrad (12) verbunden ist, um ein Leistungseingangssystem zu bilden, wenn die Sperrklinke (9) und das Klinkenrad (8) gelöst sind, dreht der Zahnkranz (7) dem Hauptkettenrad (12) folgend, und es gibt keinen Eingriff des Planetengetriebes, wodurch die Kraft direkt durch das Hauptkettenrad (12) über ein Einweglager (19) auf den Freilauf (18) übertragen wird, um das Fahrrad vorwärts zu bewegen.

4. - Fahrrad mit stufenvariabler Gangschaltung nach Anspruch 1, wobei die Mittelachsen-Kettenradgruppe (3) durch eine Kette mit dem Hauptkettenrad (12) verbunden ist, um ein Leistungseingangssystem zu bilden, wenn die Sperrklinke (9) und das Klinkenrad (8) in Eingriff sind, dreht der Zahnkranz (7) nicht mit dem Hauptkettenrad (12), wodurch die Kraft durch das Hauptkettenrad (12) über eine Bolzenkupplung auf den Planetenträger (5) übertragen wird, da der Zahnkranz (7) fixiert ist, treibt der Planetenträger (5) das Sonnenrad (4) und danach den Freilauf (18) an und treibt schließlich das Fahrrad an, um sich vorwärts zu bewegen, wodurch ein zweistufiges Antriebssystem des Fahrrads gebildet ist.

5. - Fahrrad mit stufenvariabler Gangschaltung nach Anspruch 1, wobei die Sperrklinke (9) durch Verbindung mit einer Kettenschaltung (14) neben dem Fahrradgriff über ein Stahlseil (13) gesteuert und eingestellt wird.

## Revendications

1. - Bicyclette à transmission à vitesse variable et à variation d'étage, comprenant un boîtier de pédalier de bicyclette (1), le boîtier de pédalier de bicyclette (1) comportant un axe médian (2), un groupe de plateaux d'axe médian (3) étant disposé sur l'axe médian (2), comprenant un moyeu libre (18) disposé sur un arbre arrière de bicyclette (16), le moyeu libre (18) étant fixé à un planétaire (4), un côté du planétaire (4) comportant un porte-satellites (5), des satellites (6) étant disposés dans le porte-satellites (5), une couronne dentée (7) étant disposée radialement à l'extérieur des satellites (6), une roue à rochet (8) étant disposée radialement à l'extérieur de la couronne dentée (7), un plateau principal (12) étant disposé côte à côte près du porte-satellites (5), un palier unidirectionnel (19) étant disposé à l'intérieur du plateau principal (12),
**caractérisée par le fait que**
le groupe de plateaux d'axe médian (3) comprend trois plateaux de différentes dimensions ; et
une roue à rochet (8) est disposée radialement à l'extérieur de la couronne dentée (7), la roue à rochet (8) comporte un cliquet (9), et le cliquet (9) est fixé sur le boîtier de pédalier de bicyclette (1), le cliquet (9) est commandé et ajusté par liaison à un dérailleur (14) près d'une poignée de bicyclette par un câble d'acier (13), le cliquet (9) et la roue à rochet (8) sont détachés ou engagés par l'extension ou la rétractation du câble d'acier (13), un accouplement à pion A (10) est disposé axialement à l'extérieur du porte-satellites (5), le plateau principal (12) comporte un accouplement à pion B (11), l'accouplement à pion A (10) sur le porte-satellites (5) et l'accouplement à pion B (11) sur le plateau principal (12) sont engagés, de telle sorte que le plateau principal (12) peut effectivement actionner une transmission planétaire (17).

2. - Bicyclette à transmission à vitesse variable et à variation d'étage selon la revendication 1, dans laquelle le porte-satellites (5) comporte trois satellites (6), les satellites (6) étant engagés à l'intérieur du porte-satellites (5).

3. - Bicyclette à transmission à vitesse variable et à variation d'étage selon la revendication 1, dans laquelle le groupe de plateaux d'axe médian (3) est relié au plateau principal (12) par une chaîne (15) pour former un système d'entrée de puissance, lorsque le cliquet (9) et la roue à rochet (8) sont détachés, la couronne dentée (7) tourne en suivant le plateau principal (12) et il n'y a pas d'intervention de la transmission planétaire, de telle sorte que la puissance est directement transmise au moyeu libre (18) par le plateau principal (12) par l'intermédiaire du palier unidirectionnel (19) pour propulser la bicyclette vers l'avant.

4. - Bicyclette à transmission à vitesse variable et à variation d'étage selon la revendication 1, dans laquelle le groupe de plateaux d'axe médian (3) est relié au plateau principal (12) par une chaîne pour former un système d'entrée de puissance, lorsque le cliquet (9) et la roue à rochet (8) sont engagés, la couronne dentée (7) ne tourne pas en suivant le plateau principal (12), de telle sorte que la puissance est transmise au porte-satellites (5) par le plateau principal (12) par l'intermédiaire de l'accouplement à pion, étant donné que la couronne dentée (7) est fixe, le porte-satellites (5) entraîne le planétaire (4), puis entraîne le moyeu libre (18) et enfin propulse la bicyclette vers l'avant, formant ainsi un système de transmission à deux étages de la bicyclette.

5. - Bicyclette à transmission à vitesse variable et à variation d'étage selon la revendication 1, dans laquelle le cliquet (9) est contrôlé et ajusté par liaison à un dérailleur (14) près d'une poignée de bicyclette par un câble d'acier (13).
